# EUROPEAN PATENT APPLICATION

(11) **EP 3 742 404 A1**
(43) Date of publication of application: **25.11.2020**
(21) Application number: 20172039.8
(22) Date of filing: 29.04.2020
(51) Int. Cl.: G06T 17/00, H04N 21/235, G06T 9/00

(54) **CONTENT CODING SYSTEM AND METHOD**

(30) Priority: 22.05.2019 GB 201907199
(71) Applicant: Sony Interactive Entertainment Inc., Tokyo 108-0075 (JP)
(72) Inventor: SANDERS, Matthew William, London, W1F 7LP (GB); LEONARDI, Rosario, London, W1F 7LP (GB)
(74) Representative: D Young & Co LLP

(57) **Abstract**

A content encoding system for encoding content represented by point cloud data, the system comprising a model identification unit operable to identify a model represented by the point cloud data, a coding scheme identification unit operable to identify a coding scheme associated with the identified model, and an encoding unit operable to encode at least a subset of the point cloud data in accordance with the identified coding scheme.

## Description

This disclosure relates to a content coding system and method.

In recent years, driven at least in part by the improvements made in display technology, there has been an increase in the demand for interactive content that is able to offer an immersive experience to a user. For example, the increase in the number and quality of virtual reality (VR) and augmented reality (AR) devices lends itself to the provision of immersive experiences, while the development of televisions and other display devices that offer increased resolution, refresh rate, and colour reproduction (for example) also act as increasingly suitable devices for the provision of such content. In addition to this, advances in computing and graphics technology have contributed to the increase in suitable content that may be made available.

While video games may be provided that can offer such an experience, the approaches taken to provide viewer immersion in video games may not be applicable to captured video content such as movies or sports events. For example, when generating video game content it is common that the locations and properties of all objects in the environment are known and other features, such as lighting information, are also able to be calculated. Such information is often not available for captured video content, and therefore techniques applicable to video games to enable the provision of more immersive content are not considered to be widely applicable.

One example of captured video content that is adapted for increased immersion of a user is that of three-dimensional video. Consumer devices are available that are operable to display content that may be viewed (often aided by a corresponding set of glasses that are configured to enable the viewing of three-dimensional content) in a manner that causes the user to perceive the content as having significant depth despite the use of a two-dimensional display.

However, one drawback with such systems is that the viewpoint that is adopted by the user is often pre-defined (such as tied to the camera position in a movie) or severely limited (such as allowing a user to switch between a number of such pre-defined viewpoints).

This may serve to reduce the level of immersion that is experienced by the user when viewing the content, particularly in a VR context, as despite appearing three-dimensional there is no corresponding motion of the viewpoint as the user moves their head as would be expected were the user to move their head when viewing real-world content. The resulting disconnect between the viewpoint and the user's motion can lead to a sense of discomfort for the user, in addition to the loss of immersion.

Similarly, the restrictions placed upon the viewpoint location may be made more noticeable when a user is provided with more immersive content, as the user may be more inclined to try and explore the displayed environment. This can lead to the user attempting to relocate the viewpoint to a desired location in the virtual environment, and becoming frustrated when such a relocation is not possible within the constraints of the provided content. Examples of such changes in viewpoints include a user moving their head in a VR system in order to look around an environment, or an input using a controller or the like in a two-dimensional display arrangement.

It is in view of the above considerations that so-called free viewpoint systems have been developed. The object of such systems is to provide content which a user is able to navigate freely, such that a viewpoint may be selected freely (or at least substantially so) within a virtual environment and a corresponding view is able to be provided to a user. This can enable a user to navigate between any number of viewpoints within the virtual environment, and/or for multiple users to occupy corresponding preferred viewpoints within the virtual environment. These viewpoints may be distributed about an environment in a discreet fashion, or the changing of viewpoints may be a result of a continuous motion within the environment, or content may incorporate elements of each of these.

A number of challenges exist when seeking to provide high-quality image or video content with a free viewpoint. A number of such problems derive from the limitations of the content capturing systems that are used; for example, it may be difficult to capture sufficient image information due to occlusions, image resolution, and camera calibration or the like. In addition to this, information that may be required to generate additional viewpoints (such as lighting information, depth information, and/or information about occluded objects) may be difficult to derive based upon the captured image information. Similarly, limitations of the image capturing arrangement may lead to noisy data being obtained due to a lack of precision; such data may not be suitable for reproduction.

While a number of the problems associated with these issues can be mitigated by the inclusion of a greater number of cameras (or other sensors), this can be rather impractical in many cases. Similarly, addressing these issues by simply increasing the amount of processing that is applied can also be problematic, particularly when live content is being provided, as it may introduce an undesirable latency or require excessive computing power. It is therefore considered that alternative modifications to the free viewpoint content generating may be advantageous.

It is in the context of the above problems that the present disclosure arises.

This disclosure is defined by claim 1.

Further respective aspects and features of the disclosure are defined in the appended claims.

Embodiments of the present disclosure will now be described by way of example with reference to the accompanying drawings, in which:
Figure 1 schematically illustrates a free viewpoint generation and output method;
Figure 2 schematically illustrates a content capture arrangement;
Figure 3 schematically illustrates an alternative content capture arrangement;
Figures 4a and 4b schematically illustrate an occluded content capture arrangement;
Figure 5 schematically illustrates a content processing method;
Figure 6 schematically illustrates image fusion schemes;
Figure 7 schematically illustrates image frames for performing image fusion;
Figure 8 schematically illustrates a data structure;
Figure 9 schematically illustrates a content generation and display system;
Figure 10 schematically illustrates a processing unit;
Figure 11 schematically illustrates a data processing apparatus;
Figure 12 schematically illustrates a two-dimensional model;
Figure 13 schematically illustrates a grouping applied to parts of a two-dimensional model;
Figure 14 schematically illustrates encoded point cloud data;
Figure 15 schematically illustrates an alternative format for encoded point cloud data;
Figure 16 schematically illustrates encoded difference data;
Figure 17 schematically illustrates an alternative format for encoded difference data;
Figure 18 schematically illustrates an encoded data stream;
Figure 19 schematically illustrates a content encoding system;
Figure 20 schematically illustrates a content generating system;
Figure 21 schematically illustrates a content encoding method; and
Figure 22 schematically illustrates a content generating method.

A number of different approaches for implementing free viewpoint content are considered to be suitable, including photogrammetric, light field/multiscopic, and volumetric approaches. Of course, a number of other approaches (or combinations of the above) may be considered.

The first of these approaches comprises the manipulation of captured images in order to appear three-dimensional; this can add freedom to the viewpoint by enabling the user to peer 'around' an object in the image - this can often be rather limited in scope, but is suitable for a number of purposes. Reprojection of the captured image is often used in methods following this approach, enabling the simulation of the 'correct' view (that is, a view that appears to be from the correct position).

The second approach relies on the capturing of a number of images of the environment from different locations. A free viewpoint experience may then be provided to the user by using interpolation between the captured images; the user is able to manipulate the viewpoint freely within the bounds of the image capture area (that is, the area or volume bounded by the image capture devices).

The third approach that is considered, which is the approach in the context of which the present application is provided, comprises the generation of a virtual scene representing the imaged volume in the content capture process. This may include identifying the geometry of the volume and the objects within it, as well as determining any other parameters (such as lighting effects) as appropriate. Such an approach is discussed in Multi-View Stereo: A Tutorial' (Y Furukawa, C Hernández, Foundations and Trends in Computer Graphics and Vision, Vol 9, No. 1-2, 2013), the contents of which are incorporated by reference.

While the present application is framed within the context of the volumetric approach to free viewpoint content, it is considered that the techniques discussed within may be applicable to one or more other approaches.

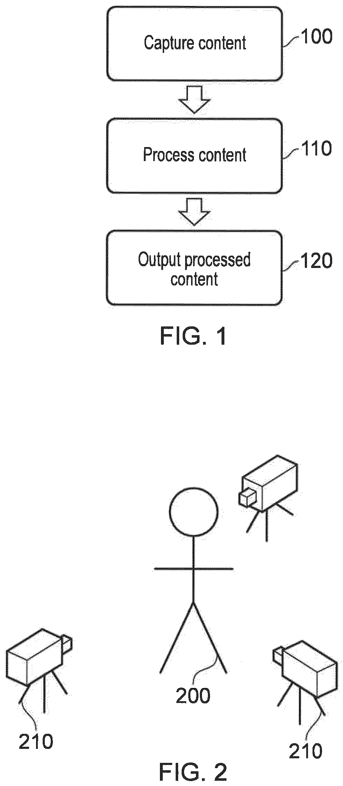

Figure 1 schematically illustrates a method for capturing and generating free viewpoint content, in line with the third approach described above.

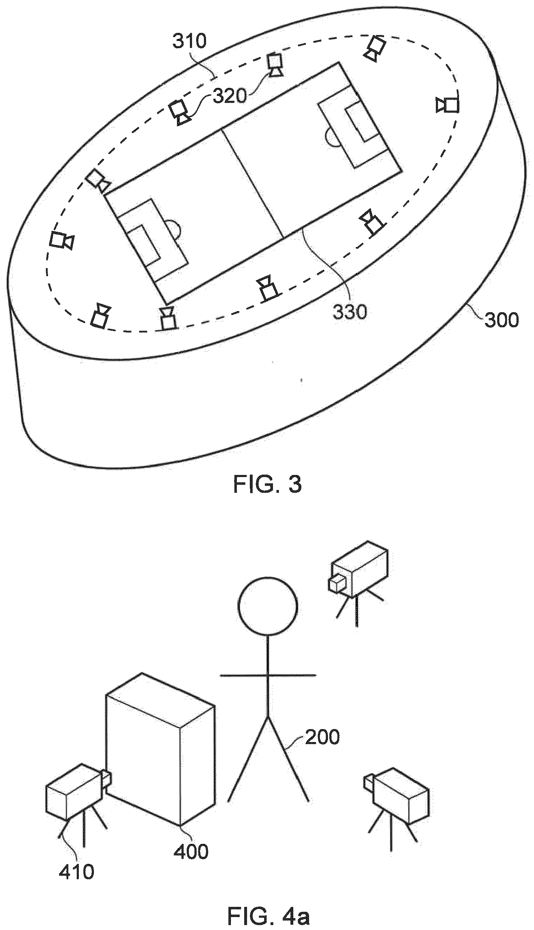

A step 100 comprises capturing the content. The content capturing process includes the use of image sensors, such as cameras, and may further include the use of microphones or the like for capturing audio. While in some cases the captured image content may be entirely two-dimensional, in other cases the content capturing process includes the capturing of depth information for a scene - this can be achieved using stereoscopic or depth cameras, for example, or any other method for determining the distance to an object in the capture environment. Examples of content capturing arrangements are described below with reference to Figures 2 and 3.

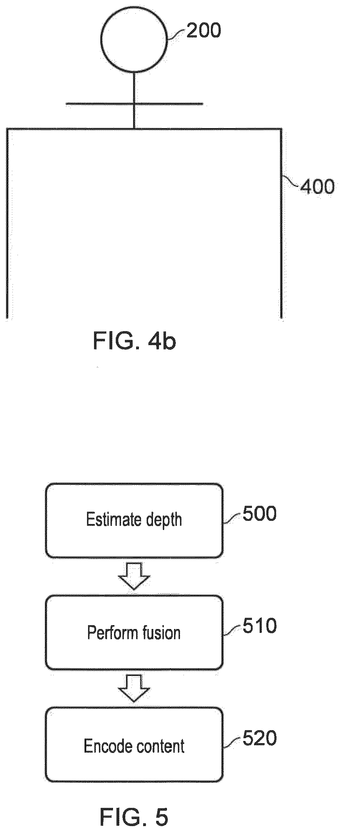

A step 110 comprises performing processing on the captured content, with the aim of generating content that a user is able to use to explore the captured environment with the aid of a free viewpoint. Examples of processing include the estimating of the depth of objects within the captured images, and the encoding of the processed data into a suitable format for storage and/or output to a viewer. Each of these is discussed below with reference to Figure 5.

The processed data comprises a three-dimensional representation of the environment for which the content capture is performed (or is sufficiently complete so as to enable the generation of such a representation). This representation may be able to be distributed to a user to enable them to generate free viewpoint experiences locally, or it may be able to be used (for example, at a server) to generate image frames in accordance with a viewpoint defined by a client device.

A step 120 comprises the output of the free viewpoint content to a viewer. This may be performed in a number of different ways; for example, the viewer may request a particular viewpoint from a server which holds the encoded data. The server may then generate images representing the viewpoint at the requested position, and transmit this to the viewer. In some embodiments, the viewer may instead be provided with encoded data for the whole (or at least a part of) the captured environment such that processing for generating image content is performed locally.

Figure 2 schematically illustrates a content capture arrangement that may be used to implement step 100 as described with reference to Figure 1.

In this Figure, a plurality of cameras 210 are arranged so as to capture images of a person 200 (such as an actor in a movie) from a range of different angles. The cameras 210 may also be configured to capture audio in the environment, although this may instead be captured separately. In some embodiments it is advantageous to be able to synchronise the cameras or establish the timing offset between their image capture - this may assist with generating a high-quality output for a user.

Between them, the cameras 210 may be arranged so as to be able to capture images of a significant proportion of the environment and objects within the environment. In an ideal scenario every part of every surface within the environment is imaged by the arrangement of cameras, although in practice this is rarely possible due to factors such as occlusions by other objects in the environment. Such an issue may be addressed in a number of manners, a selection of which is discussed below.

For example, the arrangement of cameras 210 as shown in Figure 2 may be suitable for capturing images of the user from a number of angles - but the side of the person 200 facing away from the cameras may not be well-imaged, leading to a lack of information for this area. A number of techniques may be used to mitigate this problem, some of which will be discussed below.

Figure 3 schematically illustrates an alternative content capture arrangement that may be used to implement step 100 as described with reference to Figure 1. As is apparent from Figure 3, this is a configuration that may be more suited for the capturing of large-scale events, such as sports matches, rather than individual people - although of course such an arrangement could be scaled down to an environment smaller than a sports stadium as appropriate.

Figure 3 comprises a stadium 300 which has a fixture 310 that substantially follows the shape of the stadium 300. A plurality of cameras 320 are supplied on this fixture 310, and may be angled so as to capture images of events within the stadium 300; this may include the action on the pitch 330, the sidelines, or even the crowd. The number of cameras, and the properties of each camera, may be selected freely in order to provide a suitable degree of optical coverage of the environment. For example, a set of 40 cameras each with 4K resolution and arranged so as to be able to collectively image the whole pitch 330 may be provided.

Figures 4a and 4b schematically illustrate an occlusion problem that may arise when capturing content in line with step 100 of Figure 1.

Figure 4a schematically illustrates an occluded content capture arrangement; this is the content capture arrangement of Figure 2, with an additional object 400 in the capture environment that prevent the camera 410 from correctly imaging the person 200. Of course, while shown as an inanimate object the object 400 could be anything that blocks the camera's view - such as other people, cameras, or even inclement weather.

Figure 4b schematically illustrates a viewpoint from the camera 410 of Figure 4a. It is apparent from this Figure that the camera is no longer able to capture images of the lower half of the person's 200 body due to the occlusion by the object 400. This may lead to incomplete information about this area of the environment, which can cause problems in a free viewpoint arrangement - if a user moves the viewpoint to the other side of the object 400 there would not be sufficient information to generate a view of the person 200.

In some cases, the camera system for capturing images of the environment may be robust to such occlusions - for example, given enough cameras it is possible that the arrangement leads to every part of the environment (or at least a sufficient number of parts of the environment) being imaged by more than one camera. In such a case, it is possible that images of an area occluded from one camera's view are captured by another camera.

Alternatively, or in addition, a number of processing techniques may be used to fill such gaps. For instance, information about that area (such as the colour of the trousers worn by the person 200) may be stored from previously captured frames, or determined in dependence upon other information - for example, it may be assumed that the colour is constant (either over time, spatially, or both), and so any image of the trousers may be enough to supply the colour information despite being captured at a different time, and/or imaging a different portion of the trousers. Similarly, the colour could be input by an operator or the like.

Figure 5 schematically illustrates a content processing method, which may be implemented as an example of the processing performed in step 110 of Figure 1. Of course, any suitable processing may be performed in the step 110; it is not limited to that shown in Figure 5, nor must every step of Figure 5 be performed.

A step 500 comprises an estimation of the depth of one or more parts of the environment that is imaged. In some cases, this may be performed by identifying the disparity associated with an object between a pair of stereoscopic images; in other cases, monoscopic depth detection may be performed, or a position may be estimated from a number of images based upon knowledge about the position and orientation of the cameras used to capture those images.

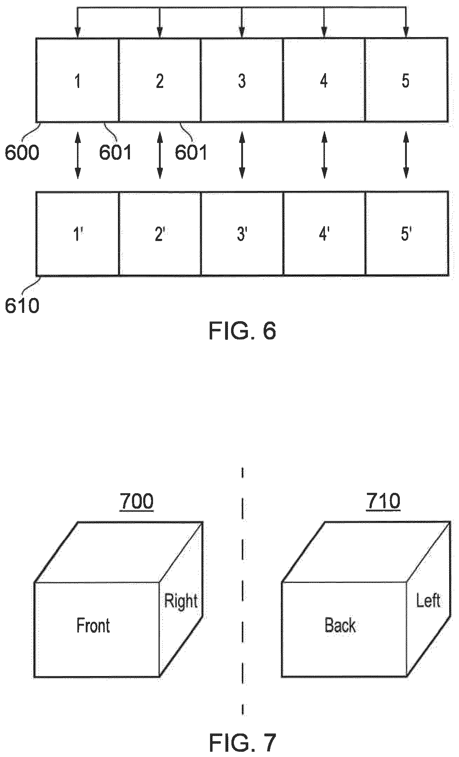

A step 510 comprises the fusion of image data. Fusion of image data is the process of combining the information that is obtainable from each of a plurality of images in order to generate a three-dimensional space using images in a two-dimensional space. For example, image data may be fused so as to generate a three-dimensional model of an object that comprises two-dimensional information about each side of the object, as imaged by a corresponding plurality of cameras. This is discussed below in more detail, with reference to Figures 6 and 7.

A step 520 comprises the encoding of the processed image data, for example to generate data that is in a format that is suitable for storage and/or transmission to a user. Examples of suitable representations of the content include the use of point clouds and/or meshes to represent objects and features in the environment. For instance, a point cloud may be defined that describes the location of points on the surface of each of a number of objects/environmental features. When rendering an image, a viewpoint within the virtual environment may be defined and the point cloud is consulted to determine which objects (points) fall within the viewing frustum - once this is determined, corresponding texture information may be applied to generate a view within the virtual environment.

Further processing may also be performed in addition to, or instead of, one or more of the steps shown in Figure 5. For example, segmentation may be performed so as to determine which elements of a captured image correspond to distinct objects and which elements form the background. Hole-filling or completion processing may also be performed, which is processing that seeks to identify where information about the environment is missing and to approximate information that may be desired, but is not present in the captured information.

As discussed with reference to step 510, fusion of image data may be performed in order to generate a more complete description of the environment in which image capture is performed. For example, image data from a second camera may be used to supplement the image data from a first camera, which can mitigate the problem of occlusion.

In general, fusion techniques utilise a number of captured images that each capture an image (a two-dimensional image and depth information) of the environment, the images being captured at different times or from different camera positions. These images are then processed to extract information to enable a three-dimensional reconstruction. An example of such a process is discussed below.

At a first stage, segmentation is performed. This process results in a separation of an imaged object and a background of the image from one another, such that the background may be removed from the image. The segmented image of the object, in conjunction with the depth data that is captured, can then be used to generate a three-dimensional image of the object from one side, where every pixel of the image represents a point in three-dimensional space.

By generating multiple such images from a number of viewpoints, three-dimensional images may be generated for an object from a number of different sides; this can enable the construction of a full three-dimensional volume representing the external shape of the object. The fusion process here is used to correlate matching points as captured by the different cameras, and to remove any erroneous points, so as to enable a combination of the captured three-dimensional images into a three-dimensional representation.

Figure 6 schematically illustrates examples of such fusion. A first image data set 600 and a second image data set 610 are shown, which correspond respectively to image data captured by a first and a second camera. Each of the image data sets comprises a number of consecutive frames 601.

Temporal fusion is a fusion technique that may be performed within a single image data set (that is, an image data set captured by a single camera over a time duration). In Figure 6, this is shown with respect to the image data set 600, wherein information from the frames 601 (labelled 1-5) may each be used to supplement data from the other frames. Temporal fusion may be advantageous when there is motion of objects within the environment; occlusions may vary between the image frames captured by a single camera, and therefore image data from earlier- or later-captured frames may be suitable to fill gaps (such as those due to occlusion) in the data for a given image frame.

Spatial fusion may be performed between the two image data sets 601 and 610 (that is, image data sets captured by cameras located at different viewpoints); for example, image data from the frame labelled 1' may be used to supplement the image data derived from the frame labelled 1. This may be performed for any pairing of image frames, rather than necessarily being limited to those captured at (at least substantially) the same time. Spatial fusion is advantageous in that the image data from each of the image data sets is obtained from a different position - different views of the same object may therefore be captured.

Figure 7 schematically illustrates an example of two image frames 601, each imaging the same object. In the first, labelled 700, the front, top, and right portions of the object can be seen by an image capture device. In the context of Figure 6, the image 700 may correspond to the image frame labelled 1 in the image data set 600.

In the second, labelled 710, the back, left, and top portions of the object can be seen by an image capture device. In the context of Figure 6, the image 710 may correspond to the image frame labelled 1' in the image data set 610. This view would therefore represent a view of the object as captured by a different image capture device that is provided at a different location. Alternatively, the image 710 may correspond to the image frame labelled 5 in the image data set 600. This view would therefore represent a view of the object as captured by the same image capture device but at a later time, this time difference being sufficiently long that the object has rotated (or the camera has moved).

In either case, the data from each of the images 700 and 710 may be combined so as to generate a more complete description of the imaged object than would be available using only a single image frame comprising the object. Of course, any suitable combination of spatial and temporal fusion may be used as appropriate - the fusion process should not be limited to the specific examples provided above.

It should be appreciated that the segmentation-based approach used in the example above is non-limiting; other methods may be suitable. For example, a truncated signed distance function (TSDF) may be used to represent a scene volumetrically, with this representation being used for integrating multiple images of the scene captured from different viewpoints.

At the conclusion of the method described with reference to Figure 5 (or an equivalent processing of the captured data), it is anticipated that the captured content has been converted into a form that enables the generation of a viewpoint at any (or at least at a substantial number of) locations within the captured environment.

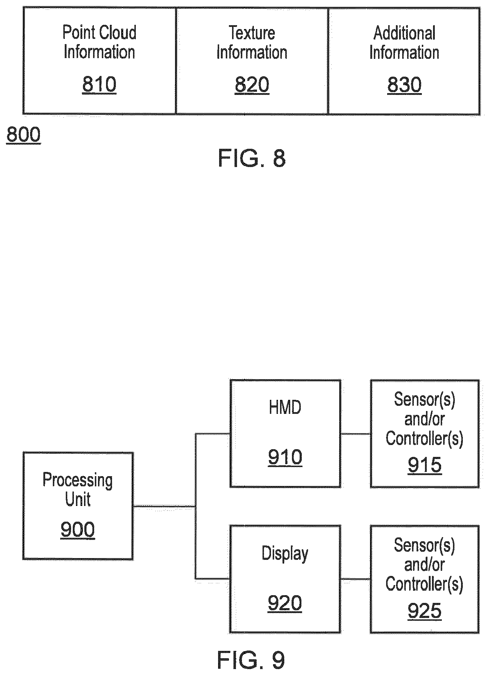

Figure 8 schematically illustrates an exemplary data structure for the storage of the generated content; the stored generated content may be referred to as free viewpoint data. In this data format, a file 800 comprises point cloud information 810, texture information 820, and additional information 830. Of course, an alternative data structure may be provided, as is appropriate for the format of the generated content.

The point cloud information 810 may comprise sufficient data to enable to reproduction of the entire virtual environment, or at least a portion of that environment. For example, a different set of point cloud information 810 may instead be generated for each of a plurality of areas within the virtual environment - such as on a per-room basis.

The texture information 820 complements the point cloud information 810, such that textures are provided that correspond typically to each of the surfaces that are able to be described using the point cloud information 810. As noted above, the texture information is applied to the geometry described by the point cloud within a viewing region (defined by the viewpoint within the virtual environment) as a part of the rendering process. The textures can be stored in any suitable image format, for example.

The additional information 830 may comprise identifying information for the data structure (such as identifying the virtual environment that is represented by the included data). Alternatively, or in addition, information assisting with the reproduction of a virtual viewpoint within the virtual environment described by the point cloud information 810 may be provided; examples include lighting information for the environment. Any other suitable information may also be included as appropriate, such as object identification information or sound source information for the virtual environment.

As noted above, this information may be provided to the user in a raw form including data (such as a point cloud representation of the environment, in addition to texture and lighting information) for the whole of the environment. However, this represents a significant amount of data to transmit and store (point clouds may comprise millions or even billions of data points) and may therefore be inappropriate in a number of scenarios.

As an alternative, this information may be provided to a viewer by generating an image at a server in response to an input viewpoint position/orientation. While this may introduce an increased degree of input latency, it may be responsive enough to provide a suitable free viewpoint experience to a user.

In either case, rendering of a viewpoint must be performed based upon the encoded data. For example, when using a point cloud representation to store information about the captured environment, the rendering process comprises a surface reconstruction process as a part of generating an image for display. This is performed so as to enable to generation of surfaces from a set of discrete points in the point cloud.

Figure 9 schematically illustrates a content generation and reproduction system. This system includes a processing unit 900, and one or both of an HMD 910 and a display 920.

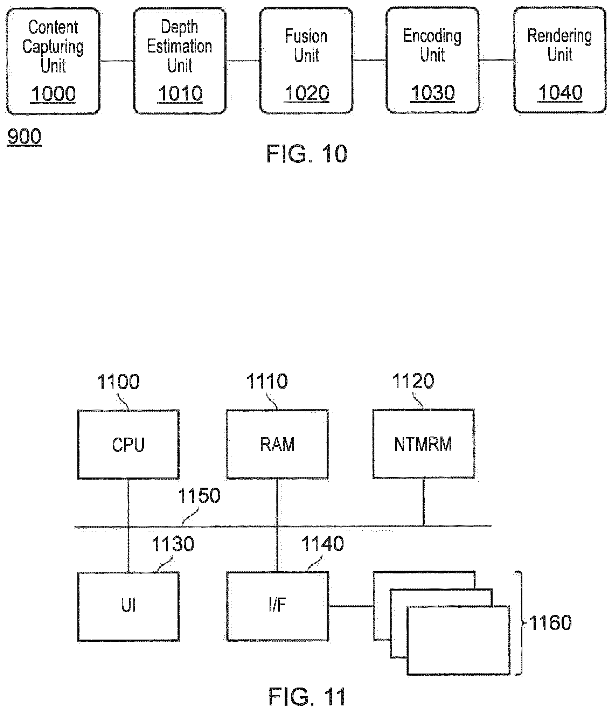

The processing unit 900 is operable to generate content (for example, by using the method discussed with reference to Figure 1), and to render a desired viewpoint for display to each of one or more users within the generated content. An exemplary arrangement of units within the processing unit 900 is shown in Figure 10 and discussed below.

The desired viewpoint may be determined in any of a number of ways; for example, the HMD 910 may be associated with one or more position and/or orientation sensors 915 that enable the user's head motion (or any other suitable motion) to be used as an input to control the motion of the desired viewpoint. Alternatively, or in addition, the viewpoint may be controlled via inputs to a controller 915. Similarly, inputs to control the viewpoint may be provided via a control pad (such as a game controller) that is associated with one or more of the displays 910 (via the controller 915) and 920 (via the controller 925) and/or the processing unit 900.

In any case, the viewpoint may be controlled in a three-dimensional manner such that the user can move the viewpoint freely (or at least substantially freely) within the virtual environment, as well as modify the orientation of the viewpoint within the virtual environment defined by the free viewpoint data.

The HMD 910 and display 920 (such as a television, mobile phone or computer monitor) are operable to display content rendered by the processing unit 900. Each of these may be used independently, such that the other device does not display content at all, or in combination; for example, the displays may show the same content (with one of the display devices acting as a spectator screen, for example) or may show different viewpoints within the same virtual environment. Of course, the number of displays (head-mountable or otherwise) may be selected freely, rather than being limited to one of each type of display.

Figure 10 schematically illustrates the processing unit 900, as described above with reference to Figure 9. The processing unit 900 comprises a content capturing unit 1000, a depth estimation unit 1010, a fusion unit 1020, an encoding unit 1030, and a rendering unit 1040.

The content capturing unit 1000 is operable to control the content capture process; for example, this may comprise the control of one or more imaging units and/or audio capture units to generate information about a real environment. Such a process is described above with reference to step 100 of Figure 1.

The depth estimation unit 1010 is operable to perform a process to generate estimates of the depth of one or more parts of the environment of which images are captured. This may comprise the use of any suitable depth estimation technique, and may use information about the locations of the content capturing devices. For example, this may comprise identifying the disparity between stereoscopic image pairs for an imaged feature. A depth estimation process is described above with reference to step 500 of Figure 5.

The fusion unit 1020 is operable to perform an image fusion process so as to enable the generation of a coherent virtual representation of the real environment. This may include the generation of three-dimensional representations of imaged objects/features within the real environment. A fusion process is described above with reference to step 510 of Figure 5.

The encoding unit 1030 is operable to generate data that is in a format that is suitable for the generation of images for display to a user, where those images may be generated for any viewpoint within the virtual environment. In some embodiments, the selected encoding method may be selected in dependence upon the desired transmission/storage methods. For example, if the encoded content is to be transmitted (such as to a separate rendering device via a network) the encoding method may be selected so as to either increase compression or reduce individual file size (such that files can be sent on an as-required basis). A content encoding process is described above with reference to step 520 of Figure 5.

The rendering unit 1040 is operable to render images of the virtual environment for output to one or more displays (such as the HMD 910 and/or display 920 of Figure 9). For example, the rendering process may comprise receiving a desired viewpoint (which may be determined based upon user inputs), identifying the regions of the point cloud that appear within the frustum defined by the desired viewpoint, and applying the corresponding textures to those point cloud regions.

In some embodiments, the processing unit 900 is instead not operable to generate the content, but is operable only to reproduce the content for display. For example, the content may be generated elsewhere and information (such as in the form of a file as discussed with reference to Figure 8) may be provided to the processing unit 900 to enable a desired viewpoint to be rendered upon request for output to one or more display devices 910 and 920.

Of course, in some embodiments it is envisaged that the processing unit 900 may simply act as an intermediate device for accessing content from a server and providing it to the one or more displays 910 and 920. For example, rendered content could be provided to the processing device 900 by a server in response to uploaded information about a requested viewpoint; such content may then be transmitted to one or more displays 910 and 920. Similarly, the processing unit 900 may be omitted altogether in embodiments in which the HMD 910 and/or display 920 are able to communicate with the server directly.

Figure 11 schematically illustrates a data processing apparatus suitable to carry out the methods discussed above and in particular to implement one or both of the free viewpoint data generation technique(s) and the image viewing or presentation technique(s) outlined above, comprising a central processing unit or CPU 1100, a random access memory (RAM) 1110, a non-transitory machine-readable memory or medium (NTMRM) 1120 such as a flash memory, a hard disc drive or the like, a user interface such as a display, keyboard, mouse, or the like 1130, and an input/output interface 1140 linked to peripherals 1160 such as a camera, a display and a position and/or orientation and/or motion detector by which a current viewpoint (in a display mode) may be controlled. These components are linked together by a bus structure 1150. The CPU 1100 can perform any of the above methods under the control of program instructions stored in the RAM 1110 and/or the NTMRM1120. The NTMRM 1120 therefore provides an example of a non-transitory machine-readable medium which stores computer software by which the CPU 1100 performs the method or methods discussed above.

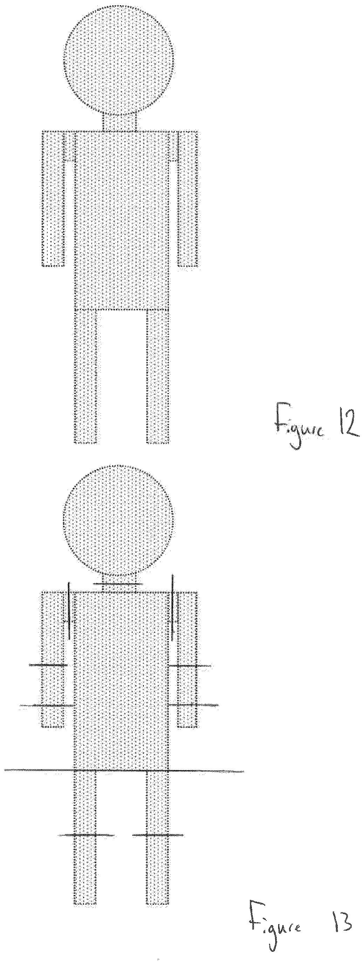

Figure 12 schematically illustrates a two-dimensional model of a human; of course the techniques discussed within are also suited to three-dimensional models, but two-dimensional models are shown here for clarity.

The model of Figure 12 comprises a number of dots that represent elements of a point cloud, which are also referred to as 'points' in this disclosure. Points in a point cloud are dimensionless elements at a specified position in an environment (such as a virtual environment, or a representation of a real environment); a group of such points is used to represent the geometry of a surface. In the example of Figure 12, each of the points represents a location of a part of the model's body - or of clothing worn by the person being modelled, for example, as it is only the surfaces presented to a camera that are mapped when capturing images of real people or objects.

While point clouds may be useful for storing information about the shape and position of objects within a virtual environment (for example, one representing a real environment that has been imaged with a plurality of cameras), they are often formed of an extremely large number of points (often reaching millions or even billions of points for an environment). This can lead to prohibitively large files that are not suitable for storage, transmission, and/or manipulation. The present disclosure provides an improved method for utilising point clouds, increasing their operability and potentially enabling larger (and therefore more detailed) point clouds to be supported.

Figure 13 schematically illustrates an example of the model of Figure 12, as subjected to a process which identifies different groups within the point cloud representation of the model. In this example, the grouping is performed in dependence upon the identification of parts of the model that have a relatively high degree of motion relative to other groups. For example, a person's hands are often subject to greater (and more significant) movement relative to the person's forearms than the person's feet as relative to the person's lower legs - hence the identification of the model's hands as separate groups but not the feet. Of course, such a division into groups is entirely exemplary, and the grouping may be determined freely.

Once the grouping has been established for a model, a coding scheme is considered. Such a coding scheme may be any suitable method of encoding the group structure (and the relevant point cloud information) into a data format.

In some embodiments, a suitable coding scheme may comprise a logical ordering of the grouping. One advantage that may be associated with such a feature is that of being able to identify components of the models in accordance with the grouping. For example, by applying the same grouping independent of the dimensions of a human model, body parts may be identified more easily. That is, the group corresponding to 'left forearm' (for example) is well-defined in such an embodiment, and no further processing is required in order to identify the left forearm from the model as would be the case in an un-grouped data set.

For example, in the context of Figure 13, the model's left foot could be encoded first, followed by the model's right foot, with the encoding progressing upwards towards the user's head. This may be advantageous in that the data that identifies the model's contact with the ground is often (at least, when the user is standing or walking normally) encoded first.

Alternatively, the grouping could be encoded from the head down or starting with any other group and progressing in any other manner.

One such example is that of beginning the encoding with the group representing the torso of the model of Figure 13, and progressing outwards in a tree structure. This may be advantageous in that the torso can act as an 'anchor point' by which the locations of the other groups may be defined.

Of course, the grouping may be varied in dependence upon the model that is being represented - while the same grouping as used for a human model may be adopted for any bipedal model, other groupings may be more appropriate for objects that deviate from this. The grouping may also be determined based upon an expected motion or any other suitable criteria, rather than simply the shape of the model.

The location of points within the point cloud may be defined with reference to any suitable coordinate system. In some embodiments, the location of points is defined with reference to world coordinates, such as a coordinate system defined for the entire environment with reference to a camera position or the like. Alternatively, or in addition, each of the points may have a location defined with reference to a single location within the model - for instance, the centre of the model, or a part of the model with which all other parts of the model move with respect to.

As a further alternative or additional mapping, the points may be defined using an internal group coordinate system. This may then be converted into another coordinate system upon assembling the model from the constituent points using information about the relative positions of the groups as appropriate.

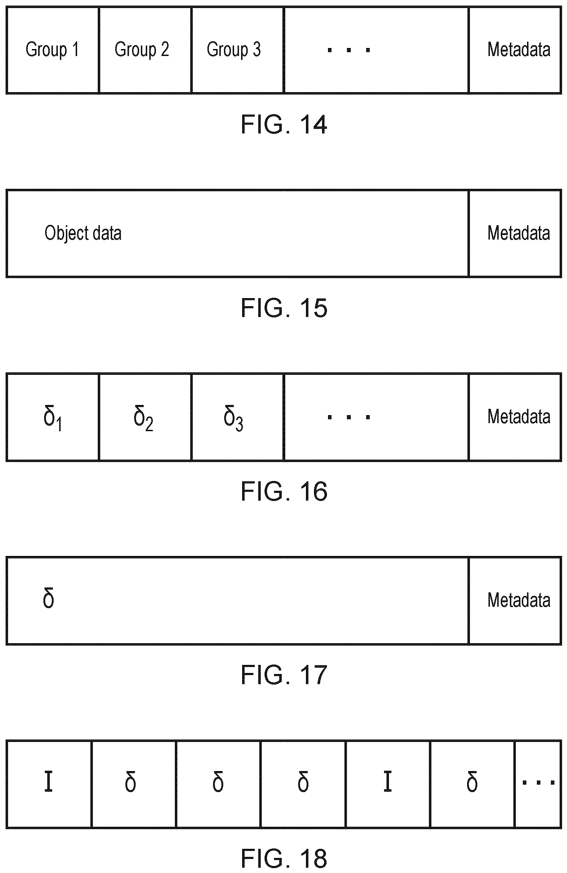

Figure 14 schematically illustrates an example of encoded data generated from such content.

In this example, each of the groups of points is encoded separately within the file (group 1, group 2, and so on), with associated metadata also being provided within the file. By providing the groups in distinct segments of the file, the reconstruction of the point cloud by a decoder may be simplified. The metadata that is provided may comprise any suitable information about the point cloud; examples of such data include information identifying an associated texture, information identifying the model to which the groups belong, and/or information identifying the object itself.

Figure 15 schematically illustrates an alternative example of encoded data generated from such content; of course, these data formats may be used in combination (such as different formats for different objects in the same environment) with each other and any other suitable formats.

In the example according to Figure 15, the grouping may be indicated within the transmitted data itself. For example, discontinuities (such as a horizontal or vertical displacement of points) may be present in the point cloud data so as to indicate the group structure. That is, the coding method may use an above-threshold sized discontinuity (for example, 5 metres or greater) in an encoded point cloud to indicate that there is a group boundary. When reproducing the model at the decoder, this gap can be reduced by the threshold amount in order to accurately reproduce the model.

Similarly, a predetermined arrangement of points (such as a particularly uncommon and/or distinctive shape) may also be inserted between groups, where that predetermined arrangement is indicative of a group boundary.

In some embodiments, the storage and/or transmission of an entire point cloud may be particularly impractical - for example, in low-bandwidth online applications. In such cases, it may be preferable to transmit only the difference information for the point cloud, this information indicating motion of one or more points within the point cloud.

The encoding schemes described above may be particularly suitable for such applications, due to the grouping structure that is applied. This is discussed in more detail below.

The transmission of difference information may be advantageous in that position information may only need to be transmitted for those points which have moved between consecutive frames. For example, in a video of an otherwise-stationary person that is talking, only points describing the position of the person's face may be necessary to be transmitted - the omission of data relating to the rest of the person can therefore result in significant data transmission savings. Difference information may often provide improvements to the compressibility of the data, even if the same number of data points are transmitted (for example, transmitting zeroes indicating no motion is easier to compress than transmitting a list of point positions).

Figure 16 schematically illustrates an example of difference encoding that is compatible with the encoded data of Figure 14. Of course, such an encoding may also be suitable for use with the encoded data of Figure 15, should the decoder be arranged so as to identify each of the groups of the data of Figure 15 with a label or the like that is able to be referenced by the data of Figure 16.

In this Figure, information about the location differences between frames is encoded on a per-object basis by separating the data into groups in the same manner as that of Figure 14. In some embodiments, an empty data structure (or an all-zero string) may be placed in a particular group's data area to indicate a lack of motion, while in other embodiments the data area may be omitted altogether. Similarly, metadata may be provided - for example, with an object ID or the like to assist with reconstruction of the model.

The differences in position (that is, the motion of points in the point cloud) may be defined using the same coordinate system in which the points are defined within the group - for example, a new position may be assigned using the relevant coordinate system. In some embodiments, the new position may be defined using a coordinate system specific to that group, regardless of how the points in the group are otherwise defined. Alternatively, or in addition, information describing the motion of points between frames may be provided.

Figure 17 schematically illustrates an example of difference encoding that is compatible with the encoded data of Figure 15.

In this example, difference data is provided in a single section of the data format as is the case in the encoded data of Figure 15. In this case, the same (and/or an alternative) indicator of grouping is used (such as large discontinuities) in providing the difference data. Groups in which no motion is observed may be omitted entirely, or may be indicated by a reduced-size point cloud (such as a cluster of points or other low-data object) that acts as a substitute to ensure that the encoded data is correctly decoded (for example, by assisting in identifying the size of discontinuities). Of course, the discontinuities may be reduced in size where appropriate to account for missing point cloud information (such as that information relating to objects/groups that are stationary).

Figure 18 schematically illustrates an example of a data stream comprising frames of independently encoded data and frames of difference encoded data.

The data stream shown in Figure 18 comprises a number of 'I' frames interspersed with a number of 'δ' frames. Of course, the relative number and arrangement of these frames may be selected freely rather than being limited to that shown.

Each of the I frames may be a frame comprising information as described with reference to Figures 14 or 15, for example. That is, each of the I frames should comprise sufficient information to generate a viewpoint (or at least describe the geometry of some or all of a virtual environment) independently of any other frames.

In contrast to this, the δ frames may be frames comprising information as described with reference to Figures 16 or 17, for example. That is, each of the δ frames should comprise sufficient information to update a viewpoint (or at least describe a change in the geometry of some or all of a virtual environment) with respect to one or more other frames.

When encoding the point cloud information using the group structures described above, it may be possible to identify redundancies in the data in order to decrease the amount of data representing the content that is stored/transmitted. A number of examples of this are provided below.

A first example is that of inter-group dependencies; that is, correlations may be identified between the positions (and/or changes in position) of groups relative to one another. A number of such correlations may be identified for each of one or more groups within a model, and in some cases multiple correlations may be identified between the same groups.

For instance, taking the example of a model of a human in which the arms are each identified as a group, correlations may be identified between the motions performed by each arm. In this case, several possible correlations may exist that can be exploited; a first is that of using both arms together (for example, to reach for an object) in which the arms perform the same motion simultaneously (albeit mirrored between the left and right sides), or the example of a person's eyelids moving simultaneously during a blink action. Similarly, when walking, a person is often inclined to swing their arms alternately such that the positions of the person's arms mirror each other in the front/back direction. In either of these (or other) cases, information identifying such a correlation may be added to an encoded file in place of separate information about a group to reduce the quantity of point cloud data that is to be encoded.

Another manner in which this could be exploited is by encoding information about which groups are connected (or otherwise related in terms of their position) to one another. In the context of a human model, information about the location of a person's forearm may indicate a correlation with the location of the person's upper arm, so as to indicate a joint that links them (elbow). In view of this information, the motion of the forearm may be characterised relative to that of the upper arm.

A second example is that of intra-group dependency; that is, correlations may be identified between the positions (and/or changes in position) of elements within a group relative to other elements within that group. Again turning to the example of a human model, this may include using the fact that parts of the body are constant through motion. For example, a person's head remains constant in size throughout motion, and as such the points in the point cloud describing the surface of the user's head can be identified as remaining constant to one another.

In some cases, where there is relative motion, the motion of the points within a group relative to one another may be characterised by a simple function that may be used to determine the motion. This function may be used to effectively interpolate between the points in the point cloud that are provided for a group. For example, a surface function may be provided that maps the deformation of the person's forearm as they grip an object in their hand.

While the function itself may be defined in the encoded data, in some embodiments a number of predefined functions may be defined that may be selected from. In such a case, only an indication of which function is selected may need to be provided in the encoded data.

As a further (or alternative) modification when encoding data in view of the described group structure, it becomes possible to modify characteristics of the point cloud for each group on an individual basis. For example, the encoding resolution of the point cloud may be modified on a per-group basis, and/or more (or less) aggressive compression may be performed on the point cloud on a per-group basis.

For example, groups that are more resilient to inaccuracies may be reduced in resolution relative to those that are less resilient; an example of this is reducing the resolution associated with a person's legs in preference to that of a person's face, due to an increased likelihood of a viewer looking at the face and the presence of small features that may be more noticeably deformed if points are not in the correct position.

Much of the above description has been provided with reference to a model of a human, and grouping based upon the different component parts of the human body. Of course, such an example is entirely illustrative. Instead, it is envisaged that a model selection (or creation) process is performed so as to determine a most suitable model to use to represent the point cloud representation of an object. The object may be a person or animal or the like, or it may be an inanimate object.

The object may be a real object that is imaged by a camera, or it may be a computer-generated object that forms a part of a video stream or the like. Similarly, the object may be a real object that has been digitally enhanced (for example, by computer manipulation) so as to generate an object that comprises both real and virtual elements. The content in which the objects appear may be image content, video content, and/or interactive media as appropriate for a particular application.

For example, a predetermined set of models may be defined that can be used as a framework for the encoded data - these may be as coarse or as fine as is suitable for a particular application. For instance, the models could correspond to broader categories such as 'humanoid', 'quadruped', and 'motor vehicle', or instead may be more specific. Examples of more specific model types could include 'male adult', 'large dog', and specific car models.

In some embodiments, this may simply be selected by a content creator - for example, point cloud representations may be manually tagged.

Alternatively, this process may be performed by analysing the point cloud to identify a suitable model. For example, the shape of the three-dimensional surface may be analysed in order to select a most-suitable model; this may be performed over a predetermined time period in order to account for the motion that is performed by the object in order to distinguish between objects that appear similar but move differently, or simply to increase the likelihood that the correct model is selected by analysing the object from a plurality of different aspects.

Of course, it may be the case that an object does not correspond exactly to any predefined models. In such a case, an analysis may be performed that determines a most-similar model. For example, it may be the case that a point cloud representation relates to an alien as an object, and a model may not be defined for this object. A number of possibilities for proceeding are envisaged.

In a first example, a most-similar model is selected. In the context of the above example, this may comprise the selection of a human model to represent the alien object - while errors may occur in the grouping as a result of the selection a non-corresponding model, the model may be sufficiently similar so as to be useful for encoding.

Alternatively, or in addition, a most-similar model is selected and modified as appropriate. For example, metadata may be provided with the encoded data that identifies any additional groups that may have been used to represent the object and their location relative to the existing groups in that model. For example, an extra head could be encoded by adding an extra group for the head (and information indicating the existence of the group), and noting that it should be attached to the shoulders such that the two heads are evenly distributed about the middle of the shoulder portion.

Alternatively, or in addition, a mapping function may be provided that is operable to identify the differences between the desired model for the object and the model that has been selected to represent the object. For instance, offsets to the relative positions of groups within the model may be provided (such as redefining an attachment point between the arms and the torso).

In the above description, it has been considered that each of the models relates to a single object; however, this may not be the case. In some embodiments it is considered that a single model may be used to represent multiple objects within the content.

An example of such an embodiment is that of content representing a zoomed-out view of a football match. In such a case, the level of detail on each of the players may be rather low and therefore it may be appropriate to represent each of the players as a group (or a plurality of groups), with the pitch (itself a stationary object) acting as a group to which each of the groups (corresponding to players) is attached. This may enable a reduction in the amount of data used to represent the match, as the number of individual point clouds is reduced.

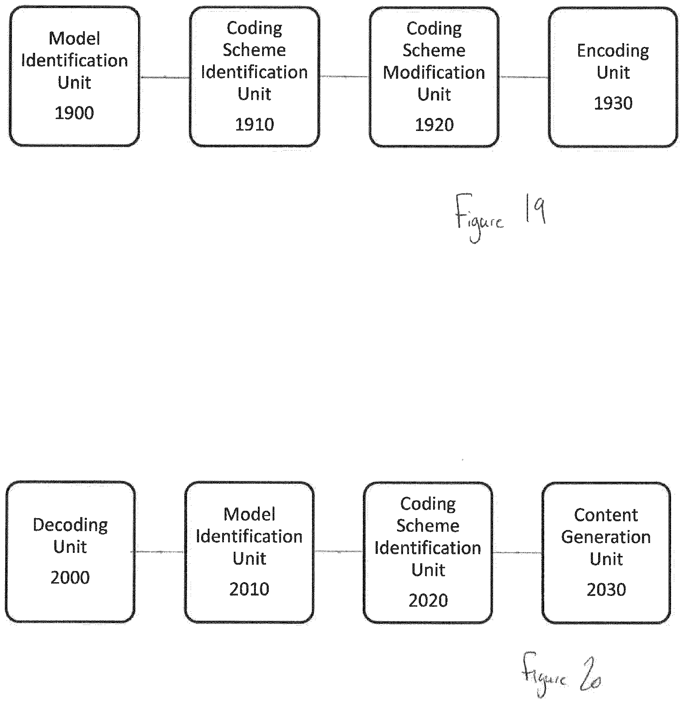

Figure 19 schematically illustrates a content encoding system for encoding content represented by point cloud data. The system comprises a model identification unit 1900, a coding scheme identification unit 1910, a coding scheme modification unit 1920, and an encoding unit 1930.

The model identification unit 1900 is operable to identify a model represented by the point cloud data. The model may indicate an expected or typical distribution of point cloud data for a specific object (or object type), and may comprise an identification of a plurality of groups into which elements of the point cloud data are assigned. In addition to this, the model may comprise information identifying a relative arrangement of two or more of those groups. A model may be identified for each object that is represented by the point cloud, or the model identification unit 1900 may operable to identify a single model that corresponds to multiple objects represented by the point cloud data. Of course, combinations of these model identification methods may be used for a single set of point cloud data.

In some embodiments, the model comprises information identifying correlations between the locations of two or more groups within the model. This is described above with reference to identified pairs of groups and the identification of motion or positions that mirror each other, for example.

Similarly, the model may (alternatively or additionally) comprise information identifying correlations between the locations of two or more sets of point cloud data within a group, each of the sets comprising one or more points. For example, this may be determined using knowledge of a constant separation (or relative position) of two elements within a group, or knowledge of how the relative positions of the points change. For example, in the scenario in which a person is driving a car it is possible to define the steering wheel as a group and to identify that when one of the points rotates, all of the points rotate as it is a solid object.

In some embodiments one or more portions of point cloud data are encoded using different parameters to one or more other portions of point cloud data in dependence upon the groups to which the portions of point cloud data are assigned. For example, the point cloud data may be encoded with a different resolution or compression scheme in dependence upon which group the data belongs to.

The coding scheme identification unit 1910 is operable to identify a coding scheme associated with the identified model. This may be performed using any of the methods described above, for example by using object recognition techniques (so as to identify characteristics of an object to enable its classification) or by indication in metadata as to what the object is or which model should be used.

The coding scheme modification unit 1920 is operable to modify the identified coding scheme to account for differences between the identified model and the point cloud representation of that model. Examples of such a modification are discussed above - this may include signalling the presence (and location) of additional groups of point cloud data, for instance.

The encoding unit 1930 is operable to encode at least a subset of the point cloud data in accordance with the identified coding scheme, for example to generate data such as that discussed with reference to Figures 14 and 15. In some embodiments, the encoding unit 1930 is operable to encode a difference between the location of corresponding elements within first point cloud data and within second point cloud data, the first and second point cloud data representing the same model at different times; examples of such data include that discussed above with reference to Figures 16 and 17. The encoding unit 1930 may also be operable to generate a stream comprising encoded point cloud data and encoded difference data, such as a stream as shown in Figure 18.

The processing unit with components illustrated in Figure 19 is an example of a a content encoding system for encoding content represented by point cloud data, the system comprising a processor configured to:
identify a model represented by the point cloud data;
identify a coding scheme associated with the identified model; and
encode at least a subset of the point cloud data in accordance with the identified coding scheme.

Figure 20 schematically illustrates a content generating system for generating content from encoded point cloud data. The system comprises a decoding unit 2000, a model identification unit 2010, a coding scheme identification unit 2020, and a content generation unit 2030.

The decoding unit 2000 is operable to decode the encoded point cloud data.

The model identification unit 2010 is operable to identify a model associated with at least a subset of the point cloud data. The model may be identified based upon information contained in the encoded data, for example in the metadata as shown in Figures 14 and 15 above.

The coding scheme identification unit 2020 is operable to identify a coding scheme associated with point cloud data corresponding to the identified model. This may comprise identifying additional groups to that of a predetermined model and their locations, in some embodiments.

The content generation unit 2030 is operable to generate a point cloud representation of an object in dependence upon the decoded point cloud data and the identified coding scheme. This point cloud representation may then be processed as a part of generating an image for display, for example by applying textures (which may be present in the encoded content) to the point cloud representation of a scene.

The processing unit with components illustrated in Figure 20 is an example of a a content encoding system for encoding content represented by point cloud data, the system comprising a processor configured to:
decode the encoded point cloud data;
identify a model associated with at least a subset of the point cloud data;
identify a coding scheme associated with point cloud data corresponding to the identified model; and
generate a point cloud representation of an object in dependence upon the decoded point cloud data and the identified coding scheme

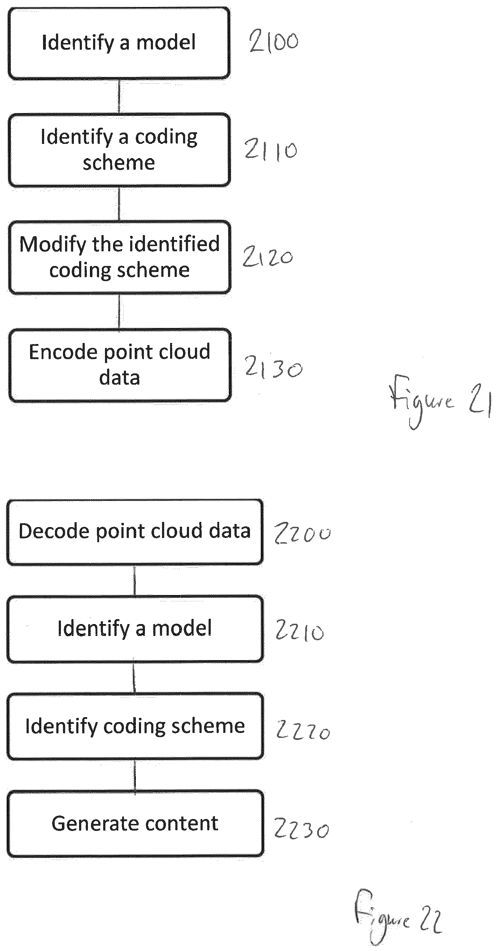

Figure 21 schematically illustrates a content encoding method for encoding content represented by point cloud data.

A step 2100 comprises identifying a model represented by the point cloud data.

A step 2110 comprises identifying a coding scheme associated with the identified model.

An optional step 2120 comprises modifying the identified coding scheme to account for differences between the identified model and the point cloud representation of that model.

A step 2130 comprises encoding at least a subset of the point cloud data in accordance with the identified coding scheme.

Figure 22 schematically illustrates a content generating method for generating content from encoded point cloud data.

A step 2200 comprises decoding the encoded point cloud data.

A step 2210 comprises identifying a model associated with at least a subset of the point cloud data.

A step 2220 comprises identifying a coding scheme associated with point cloud data corresponding to the identified model.

A step 2230 comprises generating content, the content comprising a point cloud representation of an object in dependence upon the decoded point cloud data and the identified coding scheme.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. A content encoding system for encoding content represented by point cloud data, the system comprising:
a model identification unit operable to identify a model represented by the point cloud data;
a coding scheme identification unit operable to identify a coding scheme associated with the identified model; and
an encoding unit operable to encode at least a subset of the point cloud data in accordance with the identified coding scheme.

2. A system according to claim 1, wherein the encoding unit is operable to encode a difference between the location of corresponding elements within first point cloud data and within second point cloud data, the first and second point cloud data representing the same model at different times.

3. A system according to claim 2, wherein the encoding unit is operable to generate a stream comprising encoded point cloud data and encoded difference data.

4. A system according to claim 1, wherein the model comprises an identification of a plurality of groups into which elements of the point cloud data are assigned.

5. A system according to claim 4, wherein the model comprises information identifying a relative arrangement of two or more of the groups.

6. A system according to claim 5, wherein the model comprises information identifying correlations between the locations of two or more groups within the model.

7. A system according to claim 4, wherein the model comprises information identifying correlations between the locations of two or more sets of point cloud data within a group, each of the sets comprising one or more points.

8. A system according to claim 4, wherein one or more portions of point cloud data are encoded using different parameters to one or more other portions of point cloud data in dependence upon the groups to which the portions of point cloud data are assigned.

9. A system according to claim 1, wherein the model identification unit is operable to identify a single model that corresponds to multiple objects represented by the point cloud data.

10. A system according to claim 1, comprising a coding scheme modification unit operable to modify the identified coding scheme to account for differences between the identified model and the point cloud representation of that model.

11. A content generating system for generating content from encoded point cloud data, the system comprising:
a decoding unit operable to decode the encoded point cloud data;
a model identification unit operable to identify a model associated with at least a subset of the point cloud data;
a coding scheme identification unit operable to identify a coding scheme associated with point cloud data corresponding to the identified model; and
a content generation unit operable to generate a point cloud representation of an object in dependence upon the decoded point cloud data and the identified coding scheme.

12. A content encoding method for encoding content represented by point cloud data, the method comprising:
identifying a model represented by the point cloud data;
identifying a coding scheme associated with the identified model; and
encoding at least a subset of the point cloud data in accordance with the identified coding scheme.

13. A content generating method for generating content from encoded point cloud data, the method comprising
decoding the encoded point cloud data;
identifying a model associated with at least a subset of the point cloud data;
identifying a coding scheme associated with point cloud data corresponding to the identified model; and
generating a point cloud representation of an object in dependence upon the decoded point cloud data and the identified coding scheme.

14. Computer software which, when executed by a computer, causes the computer to carry out the method of claims 12 or 13.

15. A non-transitory machine-readable storage medium which stores computer software according to claim 14.
